# EUROPÄISCHE PATENTSCHRIFT

(11) **EP 0 848 006 B1**
(45) Veröffentlichungstag und Bekanntmachung des Hinweises auf die Patenterteilung: **20.08.2003**
(21) Anmeldenummer: 97119985.6
(22) Anmeldetag: 14.11.1997
(51) Int. Cl.: C07F 7/18, C01D 13/00, C01G 9/00

(54) **Verfahren zur Herstellung von Bis(silylorganyl)-polysulfanen**
Process for preparing bis(silylorganyl)-polysulfanes
Procédé pour la préparation de bis(silylorganyl)- polysulfanes

(30) Priorität: 13.12.1996 DE 19651849
(43) Veröffentlichungstag der Anmeldung: 17.06.1998
(73) Patentinhaber: Degussa AG, 40474 Düsseldorf (DE)
(72) Erfinder: Münzenberg, Jörg, Dr., 63457 Hanau (DE); Panster, Peter, Dr., 63517 Rodenbach (DE); Prinz, Matthias, 63579 Freigericht (DE)

(56) Entgegenhaltungen:
- DE-A- 2 614 721
- DE-C- 590 278
- US-A- 5 466 848
- HOLLEMAN WIBERG: "LEHRBUCH DER ANORGANISCHEN CHEMIE" 1995 , WALTER DE GRUYTER , BERLIN, NEW YORK XP002105820 * Seite 554 - Seite 555 * * Seite 561 *
- DATABASE WPI Section Ch, Week 9543 Derwent Publications Ltd., London, GB; Class E11, AN 95-332519 XP002105821 & JP 07 228588 A (SHINETSU CHEM IND CO LTD), 29. August 1995

## Beschreibung

Die Erfindung betrifft ein Verfahren zur Herstellung von polysulfidischen Silanen unter Verwendung eines auf neuartigem Wege erzeugten anorganischen Polysulfids.

Die Verwendung von Bis(triethoxysilylpropyl)tetrasulfan in Kombination mit hochoberflächigen Kieselsäuren zur Verbesserung der Eigenschaften von Autoreifen wie Abrieb, Naßrutschfestigkeit und Rollwiderstand entspricht dem Stand der Technik, der in vielen Anwendungspatenten dokumentiert ist. Das bifunktionelle Silan wirkt dabei als Brücke zwischen dem hydrophilen anorganischen Füllstoff Kieselsäure und dem hydrophoben organischen Polymer, wobei es zu einer festen kovalenten Anbindung des Füllstoffs an das Polymer kommt.

Hergestellt werden die Silylalkylpolysulfane im wesentlichen durch eine nucleophile Substitution an Chloralkylsilanen mit auf verschiedene Art und Weise hergestellten anionischen Polysulfiden. Dieses Verfahren wird erstmals in der Patentschrift DE-PS 2141159 beschrieben, die aber keine Angaben zur Herstellung des Nucleophils Polysulfid macht. Die Synthese des Nucleophils Polysulfid stellt aber den kritischen Teil des zu Silylalkylpolysulfanen führenden Prozesses dar.

In einigen Patenten ist die Verwendung von Hydrogensulfiden zur Herstellung der Vorstufe Polysulfid beschrieben. So stellt die Patentschrift DE-PS 2542534 eine Methode zur Herstellung von Bis(silylalkyl)polysulfanen vor, bei dem das Polysulfid in situ aus Hydrogensulfid und Schwefel in Alkohol gebildet wird. Bei diesem Verfahren wird Schwefelwasserstoff freigesetzt, der durch geeignete Maßnahmen entsorgt werden muß. Diese Entsorgung stellt einen weiteren Investitionsbedarf für eine technische Anlage dar, der wirtschaftlich unerwünscht ist. Die Freisetzung von Schwefelwasserstoff kann zwar durch Zusatz von Alkoholaten unterdrückt werden (Patentschrift DE-PS 2712866 und DE-OS 3311340), doch ist auch diese Vorgehensweise aus technischen und wirtschaftlichen Gründen unvorteilhaft.

Zum einen muß das zur Durchführung dieses Verfahrens notwendige wasserfreie Hydrogensulfid in einem vorgelagerten Prozeßschritt z.B. durch eine Reaktion zwischen Alkoholaten und Schwefelwasserstoff (vgl. US-PS 5399739) gewonnen werden. Schwefelwasserstoff stellt als hochtoxisches Gas hierbei ein erhebliches Sicherheitsrisiko dar, das durch geeignete technische Maßnahmen aufwendig minimiert werden muß. Zum anderen sind die meisten Alkoholate nur wenig lagerstabil, was eine ständige in situ-Herstellung notwendig macht. Somit führt dieses weitere Ausgangsprodukt zu einer erheblichen Verteuerung der Herstellung der gewünschten Bis(silylalkyl)polysulfane.

Eine Möglichkeit zur Herstellung des Nucleophils Polysulfid besteht in der Reaktion von Sulfid mit Schwefel. In den Patentschriften US 5405985 und US 5468893 sowie in der Anmeldung EP-A 694552 werden Verfahren vorgestellt, die das entsprechende Polysulfid in wäßriger Lösung aus Sulfiden und Schwefel gewinnen und in einem Zweiphasensystem phasentransferkatalysiert mit Halogenalkylsilanen zu Polysulfanen umsetzen. Bei dieser Verfahrensweise verbleibt der Phasentransferkatalysator im Produkt mit bisher ungeklärtem Einfluß auf das anwendungstechnische Wertebild der Bis(silylalkyl)polysulfane. Außerdem zeichnen sich die Produkte aufgrund der bekannten Hydrolyseanfälligkeit der eingesezten Alkoxysilane erwartungsgemäß durch eine niedrige Lagerstabilität aus, die zu weiteren Einschränkungen bei der Verarbeitung des Produkts beim Kunden führt. Aus diesen Gründen ist klar ersichtlich, daß eine zweiphasige Syntheseführung mit in einer wäßrigen Lösung hergestelltem Polysulfid keine akzeptable Lösung darstellt.

Aus diesem Grund gibt es Ansätze dafür, für die Reaktion zwischen anorganischem Polysulfid und Alkoxysilan ersteres wasserfrei einzusetzen.
Es stellt sich jedoch dann das Problem, daß wasserfreie Sulfide am Markt nicht erhältlich sind.

Aus DE 26 147 21 ist ein Verfahren zur Herstellung von Na₂S₄ durch Trocknung von Na₂S·5H₂O bei 120 °C und anschließende Umsetzung mit Schwefel bekannt.

Ferner ist aus DE 590 278 ein Verfahren zur Herstellung von wasserfreien Alkalipolysulfiden bekannt, wobei man als Alkalisulfid ein durch Reduktion von Alkalisulfat mit Wasserstoff oder wasserstoffhaltigen Gasen hergestelltes wasserfreies Erzeugnis verwendet und dieses unmittelbar mit geschmolzenem Schwefel umsetzt.

Ein Verfahren zur Herstellung von Silanpolysulfiden durch Reaktion von Schwefelwasserstoff mit Metallalkoxyd-Lösungen, Umsetzung mit Schwefel und Reaktion mit einem Halogenhydrocarbylalkoxysilan ist aus US 5466848 bekannt.

Zur Lösung dieses Problem bieten sich gemäß der japanischen Anmeldung JP-OS 7-228588 zwei Verfahren zur Herstellung eines Polysulfids an. Im ersten Verfahren wird ein wasserhaltiges Natriumsulfid in einem Lösungsmittelgemisch gelöst und das enthaltene Kristallwasser durch Abdestillieren des Lösemittels azeotrop entfernt. Bei der zweiten Methode folgt auf die Trocknung im Vakuum die Umsetzung des Natriumsulfids mit Schwefel in wasserfreiem Ethanol.

Für die Synthese von Polysulfiden aus Sulfiden und Schwefel in siedendem Alkohol werden sehr lange Reaktionszeiten von 5 h benötigt. Dies kommt im wesentlichen dadurch zustande, daß Natriumsulfid und Schwefel nur eine sehr begrenzte Löslichkeit in den verwendeten Lösungsmitteln haben. Damit wird die Diffusion der beiden Reaktanten zueinander bestimmend für die Reaktionsgeschwindigkeit. Es ist zu vermuten, daß bei Überführung des vorgestellten Verfahrens in den technischen Maßstab sich diese Reaktionszeit sogar noch verlängert.
Im Hinblick auf eine Erhöhung der Raum-Zeit-Ausbeute und damit der besseren Ausnutzung des eingesetzten Investivkapitals ist jedoch eine Verkürzung der Reaktionszeit für eine wirtschaftlich durchzuführende Umsetzung erforderlich. Außerdem erhält man das Natriumpolysulfid nur in Form alkoholischer Lösungen/Dispersionen. Dies stellt sich als sehr nachteilig heraus, wenn Weiterverarbeitung und Herstellung nicht an demselben Ort vorgenommen werden.

Erfindungsgemäß wird ein dem Stand der Technik überlegenes Verfahren zur Lösung des Problems angeboten, das bei kürzeren Reaktionszeiten zu einem trockenen, festen Produkt führt.

Gegenstand der Erfindung ist ein Verfahren zur Herstellung von Bis(silylorganyl)-polysulfanen der allgemeinen Formel

(R¹R²R³SiR⁴)₂Sₓ (I)

in der bedeuten in der bedeuten
- R¹, R², R³:: gleich oder verschieden voneinander, verzweigte und unverzweigte Alkyl- und/oder Alkoxygruppen mit einer Kettenlänge von 1-8 C-Atomen, wobei mindestens eine Alkoxygruppe vorhanden ist, Arylreste, insbesondere Phenyl, Toluyl, Benzyl;
- R⁴:: zweiwertiger Alkylidenrest mit einer Kettenlänge von 1-8 C-Atomen, bevorzugt 1 bis 4 C-Atome oder - (CH₂)ₙ-C₆H₄-(CH₂)ₙ- (n= 1 bis 4);
- x: Zahl>1, bevorzugt von 2 bis 8,insbesondere 2 bis 6 durch Umsetzung von Halogenalkylalkoxysilanen oder Halogenalkoxysilanen der allgemeinen Formel

R¹R²R³SiR⁴X (II)

in der
- R¹, R², R³ R⁴: die Bedeutung aus Formel (I) besitzen und
- X: einem Halogenatom wie Cl, Br oder J entspricht,
mit einem Polysulfid der allgemeinen Formel

M₂Sₓ (III),

wobei
- M: für ein Alkalikation, ein halbes Erdalkali- oder Zinkkation und
- x: für eine Zahl von 2 bis 8 steht, insbesondere 2
bis 6, das dadurch gekennzeichnet, daß man in einem ersten Schritt getrocknete Polysulfide gemäß Formel (III) durch Umsetzung kristall-wasserhaltiger Sulfide (Sulfid-Hydrate) der allgemeinen Formel

M₂S_{x-z} (IV)

in der M und x die Bedeutungen wie oben besitzen, z einer Zahl von 1 bis 7 entspricht und (x-z) ≥1 ist mit Schwefel in Abwesenheit eines organischen Lösungsmittels bei einer Temperatur von 60 bis 300 °C unter Vakuum gewinnt.

Als Edukte für die getrockneten Polysulfide sind alle kristallwasserhaltigen anorganischen Sulfide geeignet, bevorzugt ein Natriumsulfid.
Dieses wird kommerziell insbesondere mit einem 60 - 62 %igen Na₂S-Gehalt angeboten und eignet sich in dieser Form besonders als Rohstoff für das erfindungsgemäße Verfahren.

Die zur Trocknung und gleichzeitigen Polysulfidherstellung notwendigen Temperaturen und Drücke sind nicht kritisch für die Durchführung der Erfindung, solange sie zur Trocknung des eingesetzten Sulfids ausreichen. Im allgemeinen sind Temperaturen von 60 - 300°C bei einem Vakuum zwischen 0,6 ·10² und 70 ·10² Pa ausreichend. Bei Temperaturen oberhalb der Phasenumwandlungstemperatur des verwendeten Sulfids kommt es zuerst zu einem Lösen des Sulfids in freigesetztem Kristallwasser, das als "Schmelzen" des Materials wahrgenommen wird. Im Laufe der Trocknung erhält man feste Polysulfide oder ein Gemisch von Polysulfiden, bei denen die mittlere Länge der Polysulfankette einem Wert von >1 bis 8 entspricht, das an der Trocknerwandung anhaftet und deshalb mechanisch abgereinigt werden muß. In einer bevorzugten Ausführungsform der Erfindung wird dieser "Schmelzvorgang" durch Verwendung von Temperaturen unterhalb der Phasenumwandlungstemperatur vermieden. Im Laufe der Trocknung kann die Temperatur aufgrund der mit sinkendem Kristallwasseranteil der Sulfid-Hydrate ansteigenden Phasenumwandlungstemperaturen langsam gesteigert werden, bis man ein trockenes Polysulfid erhält.

Das zur Durchführung der Erfindung nötige Vakuum ist abhängig von der Temperatur. Je höher die Temperatur gewählt wird, desto höhere Drücke können zugelassen werden. Zur Verkürzung der Trocknungs-/Synthesezeit ist es angebracht, möglichst niedrige Drücke zu erreichen. In einer bevorzugten Ausführungsform der Erfindung wird ein Vakuum 40·10² Pa verwendet.

Das Verhältnis aus Sulfid-Hydrat und S kann so gewählt werden, daß eine große Bandbreite von Polysulfiden M₂Sₓ abgedeckt wird. Für ein gewünschtes Polysulfid M₂Sₓ benötigt man 1 Äquivalent Sulfid-Hydrat und n(x-1) Äquivalente Schwefel. Der Faktor n kann erfindungsgemäß zwischen stöchiometrischen Schwefelmengen (n = 1) und einem leichten Schwefelüberschuß oder -unterschuß (1 ≤ n ≤ 1,1) schwanken. Für die Synthese der Bis(silylalkyl)polysulfane werden Polysulfide mit mehr als einem S-Atom (x > 1), bevorzugt zwischen 2 und 8 S-Atomen (2 ≤ x ≤ 8) eingesetzt. Ihr erfindungsgemäß erreichbarer und für die Umsetzung geeigneter Wassergehalt beläuft sich auf 0 bis 10 Gew.%, insbesondere bis 6 Gew.%

Das in dem kombinierten Trocknungs- und Syntheseschritt hergestellte Polysulfid gemäß Formel (III) wird danach mit halogenhaltigen Silanen gemäß Formel (II) in einem inerten polaren Lösungsmittel oder Lösungsmittelgemisch umgesetzt.

Die Reaktionskomponenten halogenhaltiges Silan gemäß Formel (II) und die Polysulfide gemäß Formel (III) können gemeinsam in einem Lösungsmittel bzw. Lösungsmittelgemisch vorgelegt und zur Reaktion gebracht werden oder man dosiert einen der beiden Reaktanten so oder als Lösung zu der zweiten Reaktionskomponente zu. Die zweite Reaktionskomponente kann ebenfalls als Stoff oder als Lösung vorliegen. Für die erfindungsgemäße Durchführung des Verfahrens ist es nicht kritisch, welcher der beiden Reaktanten vorgelegt und welcher zudosiert wird.

Die der eigentlichen Herstellung der Bis(silylorganyl)-polysulfiden vorgelagerte Polysulfidherstellung (Kennzeichen aus Anspruch 1) führt zu einer erheblichen Verkürzung der Taktzeiten und macht dieses Verfahren außerordentlich wirtschaftlich.

In einer bevorzugten Form der Erfindung werden beide Reaktanten gemäß den Formeln (II) und (III) in einem inerten Lösungsmittel bzw. Lösungsmittelgemisch vorgelegt und anschließend zur Reaktion gebracht.

Als Lösungsmittel bzw. Komponenten eines Lösungsmittelgemischs kommen Ether wie Diethylether, Diisopropylether, Dibutylether, Methyl-tert. butylether, Tetrahydrofuran, Dioxan, Dimethoxyethan oder Diethoxyethan, Alkohole wie Methanol, Ethanol, Propanol und Ethylenglycol sowie aliphatische oder aromatische Kohlenwasserstoffe wie Pentan, Hexan, Heptan, Petrolether, Benzol, Toluol oder Xylol in Frage. Bevorzugte Lösungsmittel sind Alkohole, wobei in einer besonders bevorzugten Ausführungsform der Erfindung der verwendete Alkohol dem der im Alkoxysilylrest gebundenen Alkoxygruppe entspricht.

Um die Reaktion zwischen dem Chloralkylsilan und den Polysulfiden zu beschleunigen, wird die Reaktionslösung auf eine Temperatur zwischen 40°C und dem Siedepunkt der Reaktionsmischung angeheizt. Bevorzugter Weise wird eine Reaktionstemperatur nahe der Siedetemperatur der Reaktionsmischung benutzt.

Der während der Reaktion herrschende Druck ist nicht kritisch für die Durchführung dieser Erfindung, so lange er Reaktionstemperaturen oberhalb von 40°C gestattet.

Die Reaktionszeit ist abhängig von der Reaktionstemperatur. Je höher die Reaktionstemperatur, desto kürzer ist die zur vollständigen Umsetzung nötige Zeit. Im allgemeinen sind Reaktionszeiten von 1 bis 8 h ausreichend.

Nach Beendigung der Reaktion wird das Reaktionsgemisch filtriert, um ausgefallene unlösliche Halogehide zu beseitigen. Vom Filtrat wird das Lösungsmittel bzw. Lösungsmittelgemisch abgetrennt. Dazu wird das Produktgemisch auf eine Temperatur oberhalb der Siedetemperatur des Lösungsmittels bzw. Lösungsmittelgemischs erhitzt und dieses abdestilliert. In einer bevorzugten Ausführungsform wird das Lösungsmittel im Vakuum entfernt.

Die Durchführung der Erfindung wird durch die folgenden Beispiele näher erläutert.

### Beispiel 1:

### Herstellung von Bis (3,3'-triethoxysilylpropyl)polysulfan mit einer mittleren S-Kettenlänge von 3,7

In einem 500 ml Dreihalskolben mit Rückflußkühler wird 32,04 g (ca. 0,25 mol) Na₂S-Hydrat (60 - 62 % Na₂S-Gehalt) zusammen mit 24,05 g (0,75 mol) Schwefel vorgelegt und in einem Vakuum von 35 mbar 1,5 h in einem Heizpilz auf 250°C erhitzt. Dabei schmilzt das Gemisch zuerst auf und es destilliert Wasser ab. Nach 1,5 h ist die Schmelze erstarrt. Es wird abgekühlt, der Kolben mit einem Tropftrichter, N₂-Spülung und einem KPG-Rührer versehen und mit 125 ml Ethanol beschickt. Nach Erwärmen auf Rückfluß, wobei ein Teil der erstarrten Schmelze in Lösung geht, wird 120,4 g (0,5 mol) 3-Chlorpropyltriethoxysilan bei dieser Temperatur innerhalb von 15 min zugetropft. Es wird weitere 2 h unter Rückfluß erhitzt, wobei die Farbe des Reaktionsgemischs von ursprünglich dunkelbraun nach gelb umschlägt. Nach Abkühlen bei Raumtemperatur wird druckfiltriert, der Filterkuchen mit 50 ml nachgewaschen und die vereinigten Filtrate bei 90°C und 30 mbar im Rotationsverdampfer eingedampft. Es wird 121,51 g (0,23 mol) eines Polysulfangemischs mit einer mittleren S-Kettenlänge von 3,7 erhalten. Die Ausbeute beträgt 92 %. Die Identität des Gemischs wird durch das ¹H-NMR-Spektrum bestätigt.

### Beispiel 2:

### Herstellung von Bis(3,3'triethoxy-silylpropyl)polysulfan mit einer mittleren S-Kettenlänge von 3,7

In einem eingekerbten 1000 ml-Kolben werden 32,04 g (ca. 0,25 mol) Na₂S-Hydrat (60 - 62 % Na₂S) zusammen mit 24,05 g (0,75 mol) Schwefel vorgelegt und im Rotationsverdampfer bei einem Vakuum von 13 mbar folgendem Temperaturprogramm unterworfen:

| | |
|---|---|
| 15 min | 90°C |
| 30 min | 100°C |
| 30 min | 110°C |
| 60 min | 140°C |

Das entstehende, im Verlauf der Trocknung nicht aufgeschmolzene Natriumpolysulfid wird in einen Dreihalskolben überführt. Nach Zugabe von 125 ml Ethanol und 120,4 g 3-Chlorpropyltriethoxysilan wird in einem 500 ml Dreihalskolben mit Rückflußkühler mit N₂-Spülung 2 h unter Rückfluß erhitzt. Es wird auf Raumtemperatur abgekühlt, der ausgefallene Niederschlag abfiltriert und der Filterkuchen mit 50 ml Ethanol nachgewaschen. Nach Abdestillieren des Lösungsmittels von den vereinigten Filtraten im Rotationsverdampfer bei 90°C und einem Vakuum von 30 mbar muß erneut wenig ausgefallener Niederschlag abfiltriert werden. Es werden 120,90 g (0,23 mol) eines Polysulfangemischs mit einer mittleren S-Kettenlänge von 3,7 erhalten. die Ausbeute beträgt 92 %. Die Identität des Gemischs wird durch das ¹H-NMR-Spektrum bewiesen.

### Beispiel 3:

### Herstellung von Bis(3,3'triethoxy-silylpropyl)polysulfan mit einer mittleren S-Kettenlänge von 2,0

In der Apparatur von Beispiel 1 wird 32,04 g (ca. 0,25 mol) Na₂S-Hydrat (60 -62 % Na₂S-Gehalt) zusammen mit 8,02 g (0,25 mol) Schwefel vorgelegt und in einem Vakuum von 35 mbar 2 h in einem Heizpilz auf 250°C erhitzt. Dabei schmilzt das Gemisch zuerst auf und es destilliert Wasser ab. Nach 2 h ist die Schmelze erstarrt. Es wird abgekühlt, der Kolben mit einem Tropftrichter und einem KPG-Rührer versehen und mit 125 ml Ethanol beschickt. Nach Erwärmen auf Rückfluß, wobei ein Teil der erstarrten Schmelze in Lösung geht, wird 120,4 g (0,5 mol) 3-Chlorpropyltriethoxysilan bei dieser Temperatur innerhalb von 15 min zugetropft. Es wird weitere 2 h unter Rückfluß erhitzt, wobei die Farbe des Reaktionsgemischs von ursprünglich orangegelb nach gelb umschlägt. Nach Abkühlen bei Raumtemperatur wird druckfiltriert, der Filterkuchen mit 50 ml Ethanol nachgewaschen und die vereinigten Filtrate bei 90°C und 30 mbar im Rotationsverdampfer eingedampft. Es wird 99,51 g (0,21 mol) eines Polysulfangemischs mit einer mittleren S-Kettenlänge von 2,0 erhalten. Die Ausbeute beträgt 84 %. Die Identität des Gemischs wird durch das ¹H-NMR-Spektrum bestätigt.

### Beispiel 4:

### Herstellung von Bis(3,3'triethoxy-silylpropyl)polysulfan mit einer mittleren S-Kettenlänge von 1,9

In der gleichen Apparatur wie im Beispiel 2 werden 32,04 g (ca. 0,25 mol) Na₂S-Hydrat (60 - 62 % Na₂S) zusammen mit 8,02 g (0,25 g) Schwefel vorgelegt und im Rotationsverdampfer bei einem Vakuum von 13 mbar folgendem Temperaturprogramm unterworfen:

| | |
|---|---|
| 15 min | 90°C |
| 30 min | 100°C |
| 30 min | 110°C |
| 60 min | 140°C |

Das entstehende, im Verlauf der Trocknung nicht aufgeschmolzene Natriumpolysulfid wird in einen Dreihalskolben überführt. Nach Zugabe von 125 ml Ethanol und 120,4 g 3-Chlorpropyltriethoxysilan wird in einem 500 ml Dreihalskolben mit Rückflußkühler mit N₂-Spülung 2 h am Rückfluß erhitzt. Es wird auf Raumtemperatur abgekühlt, der ausgefallene Niederschlag abfiltriert und der Filterkuchen mit 50 ml Ethanol nachgewaschen. Nach Abdestillieren des Lösungsmittels von den vereinigten Filtraten im Rotationsverdampfer bei 90°C und einem Vakuum von 30 mbar muß erneut wenig ausgefallener Niederschlag abfiltriert werden. Es werden 97,45 g (0,21 mol) eines Polysulfangemischs mit einer mittleren S-Kettenlänge von 1,9 erhalten. die Ausbeute beträgt 83 %. Die Identität des

Gemischs wird durch das ¹H-NMR-Spektrum bewiesen.

## Patentansprüche

1. Verfahren zur Herstellung von Bis(silylorganyl)-polysulfanen der allgemeinen Formel
(R¹R²R³SiR⁴)₂Sₓ (I)
in der bedeuten
R¹, R², R³: gleich oder verschieden voneinander, verzweigte und unverzweigte Alkyl- und/oder Alkoxygruppen mit einer Kettenlänge von 1-8 C-Atomen, wobei mindestens eine Alkoxygruppe vorhanden ist, Arylreste, insbesondere Phenyl, Toluyl, Benzyl;
R⁴: zweiwertiger Alkylidenrest mit einer Kettenlänge von 1-8 C-Atomen, bevorzugt
1 bis 4 C-Atome oder
-(CH₂)ₙ-C₆H₄-(CH₂)ₙ- (n= 1 bis 4);
x Zahl>1, bevorzugt von 2 bis 8; durch Umsetzung von Halogenalkylalkoxysilanen oder Halogenalkoxysilanen der allgemeinen Formel
R¹R²R³SiR⁴X (II)
in der
R¹, R², R³ R⁴ die Bedeutung aus Formel (I) besitzen und
X einem Halogenatom wie Cl, Br oder
J entspricht,
mit einem Polysulfid der allgemeinen Formel
M₂Sₓ (III),
wobei
M für ein Alkalikation, ein halbes Erdalkali- oder Zinkkation und
x für eine Zahl von 2 bis 8 steht
**dadurch gekennzeichnet, daß** man in einem ersten Schritt getrocknete Polysulfide gemäß Formel (III) durch Umsetzung kristall-wasserhaltiger Sulfide (Sulfid-Hydrate) der allgemeinen Formel
M₂S_{x-z} (IV)
in der M und x die Bedeutungen wie oben besitzen, z einer Zahl von 1 bis 7 entspricht und (x-z) ≥1 ist, mit Schwefel in Abwesenheit eines organischen Lösungsmittels bei einer Temperatur von 60 bis 300 °C und einem Vakuum zuischen 0.6·10² und 70·10² Pa gewinnt.

2. Verfahren gemäß Anspruch 1,
**dadurch gekennzeichnet,**
**daß** man in der ersten Stufe kristallwasserhaltiges Na₂S mit einem Gehalt von 60 bis 62 Gew.-% an Na₂S einsetzt.

3. Verfahren gemäß den Ansprüchen 1 oder 2,
**dadurch gekennzeichnet, daß** man zur Herstellung eines Polysulfids der allgemeinen Formel (III) ein Äquivalent des wasserhaltigen Monosulfids mit n(x-1) Äquivalenten Schwefel umsetzt, wobei n einen Wert von 1 ≤ n ≤ 1,1 einnimmt.

4. Verfahren gemäß den Ansprüchen 1 bis 3,
**dadurch gekennzeichnet, daß** man die Temperatur bei der Umsetzung zu den Polysulfiden in Abhängigkeit von der Phasenumwandlungstemperatur der Sulfid-Hydrate in der Weise erhöht, daß sie immer unter der jeweilig relevanten Umwandlungstemperatur liegt.

## Claims

1. A process for the production of bis(silylorganyl)-polysulfanes of the general formula
(R¹R²R³SiR⁴)₂Sₓ (I)
in which
R¹, R², R³: mean identically or differently from each other, branched and unbranched alkyl and/or alkoxy groups having a chain length of 1-8 C atoms, wherein at least one alkoxy group is present, aryl residues, in particular phenyl, toluyl, benzyl;
R⁴: means a divalent alkylidene residue having a chain length of 1-8 C atoms, preferably 1 to 4 C atoms or -(CH₂)ₙ-C₆H₄-(CH₂)ₙ- (n = 1 to 4);
x means a number >1, preferably from 2 to 8;
by reacting haloalkylalkoxysilanes or haloalkoxysilanes of the general formula
R¹R²R³SiR⁴X (II)
in which
R¹, R², R³ R⁴ have the meaning from the formula (I) and
X designates a halogen atom such as Cl, Br or I.
with a polysulfide of the general formula
M₂Sₓ (III),
wherein
M denotes an alkali metal cation, half an alkaline earth metal or zinc cation and
x denotes a number from 2 to 8,
**characterised in that** in a first stage dehydrated polysulfides according to the formula (III) are obtained by reacting sulfides containing water of crystallisation (sulfide hydrates) of the general formula
M₂S_{x-z} (IV)
in which M and x have the meanings as above, z designates a number from 1 to 7 and (x-z) is ≥1, with sulfur in the absence of an organic solvent at a temperature of 60 to 300°C and a vacuum of between 0.6·10² and 70·10².

2. A process according to claim 1,
**characterised in that** ,
in the first stage Na₂S containing water of crystallisation having an Na₂S content of 60 to 62 wt.% is used.

3. A process according to claims 1 or 2,
**characterised in that**, in order to produce a polysulfide of the general formula (III), one equivalent of the hydrated monosulfide is reacted with n(x-1) equivalents of sulfur, wherein n assumes a value of 1 ≤ n ≤ 1.1.

4. A process according to claims 1 to 3,
**characterised in that** the temperature during the reaction to yield the polysulfides is increased as a function of the phase transition temperature of the sulfide hydrates in such a manner that it is always below the particular relevant transition temperature.

## Revendications

1. Procédé de préparation de bis(silyl)polysulfanes de formule générale
(R¹R²R³SiR⁴)₂Sₓ (I)
dans laquelle
R¹, R², R³, identiques ou différents, représentent des groupes alkyle et/ou alcoxy ramifiés et non ramifiés ayant une longueur de chaîne ayant de 1 à 8 atomes de carbone, où au moins un groupe alcoxy est présent, des radicaux aryle, en particulier phényle, toluyle, benzyle,
R⁴ représente un radical alkylidène bivalent ayant une longueur de chaîne de 1 à 8 atomes de carbone, de préférence de 1 à 4 atomes de carbone, ou -(CH₂)ₙ-C₆H₄-(CH₂)ₙ- (n = 1 à 4) ;
x représente un nombre supérieur à 1, de préférence de 2 à 8, en particulier de 2 à 6,
par réaction d'halogénalkyl alcoxysilanes ou d'halogéno-alcoxysilanes de formule générale
R¹R²R³SiR⁴X (II)
dans laquelle
R¹, R², R³, R⁴ ont la définition de la formule (I) indiquée ci-dessus et
X est un atome d'halogène tel que Cl, Br ou I
avec un polysulfure de formule générale
M₂Sₓ (III),
dans laquelle
M représente un cation de métal alcalin, un hémi-cation de métal alcalino-terreux ou un cation zinc et
x représente un nombre allant de 2 à 8,
**caractérisé en ce que**
dans une première étape on obtient sous vide des polysulfures séchés selon la formule (III) par réaction de sulfures contenant de l'eau de cristallisation (sulfures hydratés) de formule générale
M₂S_{x-z} (IV),
dans laquelle M et x ont les significations indiquées ci-dessus, z représente un nombre allant de 1 à 7 et (x-z) ≥ 1, avec du soufre en l'absence d'un solvant organique à une température allant de 60 à 300°C et un vide compris entre 1,6 x 10² et 70 x 10² Pa.

2. Procédé selon la revendication 1,
**caractérisé en ce que**
dans la première étape on utilise Na₂S contenant de l'eau de cristallisation ayant une teneur de 60 à 62 % en poids en Na₂S.

3. Procédé selon les revendications 1 ou 2,
**caractérisé en ce que**
pour la préparation d'un polysulfure de formule générale (III), on fait réagir un équivalent du monosulfure contenant de l'eau avec n(x-1) équivalent de soufre, où n prend une valeur de 1 ≤ n ≤ 1,1.

4. Procédé selon les revendications 1 à 3,
**caractérisé en ce qu'**
on élève la température lors de la réaction pour donner des polysulfures en fonction de la température de transformation de phase des sulfures hydratés de manière qu'elle se situe toujours en dessous de la température de transformation en question correspondante.
